# EUROPEAN PATENT APPLICATION

(11) **EP 1 279 855 A2**
(43) Date of publication of application: **29.01.2003**
(21) Application number: 02004968.0
(22) Date of filing: 05.03.2002
(51) Int. Cl.: F16F 1/38

(54) **Vibration-isolating bushing and method of manufacturing the same**

(30) Priority: 26.07.2001 JP 2001225272
(71) Applicant: TOYO TIRE & RUBBER CO., LTD ., Osaka 550-0002 (JP)
(72) Inventor: Kameda, Masanao, Nishiku, Osaka 550-0002 (JP)
(74) Representative: Strehl Schübel-Hopf & Partner

(57) **Abstract**

A vibration-isolating bushing, with which downsizing and weight reduction are attainable and the face pressure of the edge face of an inner cylinder can be reduced, comprises an inner cylinder (1; 13) having a bulge portion (7; 12) bulging in an axially central area thereof in an axially square direction, an outer cylinder (2) disposed outwardly of the inner cylinder in a spaced relationship, and a rubber-like elastomer (3) interposed between the inner and outer cylinders (1; 13)(2) and vulcanization-molded. After the vulcanization molding, an upset portion (5; 15) is formed at one extremity of the inner cylinder in a larger wall-thickness than that of other part by abuttingly forcing an axially one edge face (6) of the inner cylinder (1) on a contact-pressing jig (8) in the axial direction, whereby the area of the edge face is enlarged.

## Description

This invention relates to a vibration-isolating bushing, for example, adapted to be integrated in part of a suspension mechanism of an automobile thereby to control vibrations or the like transmitted from the wheels side to the vehicle body side.

Generally, in automobiles such as a passenger car, in order to control vibrations transmitted from the wheels side thereof to the vehicle body side or vibrations transmitted from the engine side to the vehicle body side, a vibration-isolating bushing is incorporated in a part of the suspension mechanism or engine support mechanism.

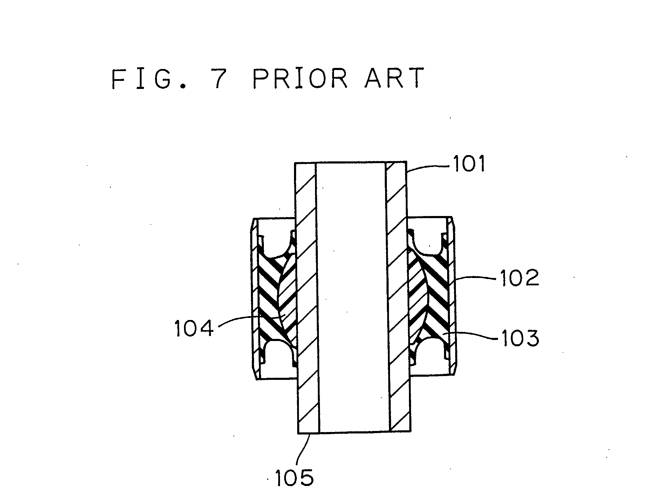

One example of a prior art vibration-isolating bushing is indicated in Fig. 7. This vibration-isolating bushing is a so-called bulge type vibration-isolating bushing and is made up of an inner cylinder 101 of a drum form having axially one cross-section, a bulge portion 104 of a generally hemispherical form fixed to an outer circumferential face thereof in the vicinity of an axially central part, an outer cylinder 102 disposed outwardly of the bulge portion in a spaced relationship, and a rubber-like elastomer 103 interposed between the inner cylinder 101 and the outer cylinder 102 in a manner to cover the bulge portion 104. This construction permits setting of predetermined spring characteristics in the axial direction and an axially square (normal) direction of the vibration-isolating bushing and in a pry direction where central axes of the inner and outer cylinders tilt relatively. Here, the terms "axial direction" and "axially square direction" used herein throughout the description and claims mean a direction in which the axis of the inner cylinder pierces through its center and a direction orthogonally intersecting the axial direction, respectively

Stated another way with the vibration-isolating bushing illustrated in Fig. 7, the rubber-like elastomer 103 covering the outer circumferential side of the bulge portion 104 has a thickness in the axially square direction set to be thin near an axial center and a thickness set to be thick near at both axial ends whereby the vibration-isolating bushing is set to have a large spring constant in the axially square direction, a small spring constant in the prying direction, and a predetermined spring constant in the axial direction.

The vibration-isolating bushing as shown in Fig. 7 is adapted and constructed so that in the condition that both edge faces 105 of the inner cylinder 101 are pinched by an attachment member such as a bracket or only one edge face 105 of the inner cylinder 101 is abutted on the attachment member, a shaft member is inserted internally through the inner cylinder to be fastened and fixed to the attachment member whereas the outer cylinder 102 is fixed to another member whereby both members are connected in a vibration-isolating manner.

In this vibration-isolating bushing, in case where the area of the edge face of the inner cylinder is small, the surface pressure by fastening to the attachment member is large, so that a subsidence of the attachment member or buckling of an outer end portion of the inner cylinder is likely to occur.

To solve the difficulty, it is conceivable to make the outside diameter of the inner cylinder large thus enlarging the area of the edge face of the inner cylinder. In case where the outside diameter is thus made large, however, in order to maintain the spring constants at respective predetermined values, the rubber-like elastomer performing a vibration-isolating function is necessitated to retain the predetermined thickness mentioned above and consequently the outer cylinder must be made large by the amount corresponding to the increment in outside diameter of the inner cylinder, as a result of which there will occur the problem that the outside diameter of the vibration-isolating bushing as a whole is ultimately enlarged.

On the other hand, in case where the area of the edge surface of the inner cylinder is rendered large by making the outside diameter of the inner cylinder large, there is still the problem that the weight of the inner cylinder is increased and the weight of the overall vibration-isolating bushing is increased, accordingly.

In the light of the aforementioned tasks, an object of the present invention is to provide a so-called bulge type of vibration-isolating bushing, with which while maintaining its compactness and lightweight, the face pressure of the edge face of the inner cylinder can be made small without changing the weight of the inner cylinder

In order to attain the aforesaid object this invention provides a vibration-isolating bushing which comprises an inner cylinder having, in the vicinity of an axially central part thereof a bulge portion swelling in an axially square direction; an outer cylinder disposed outwardly of and in a spaced relationship to the inner cylinder; and a rubber-like elastomer interposed between the inner cylinder and the outer cylinder, and which is characterized in that the inner cylinder has an upset portion formed at an extremity part thereof the upset portion having a larger wall-thickness than other part than the extremity part.

According to this construction, the upset portion having a larger wall-thickness is formed at the extremity part of the inner cylinder without the necessity of enlarging the outside diameter of the entirety of the inner cylinder, so that downsizing and weight reduction are attainable. Besides, by making the area of the edge face of the inner cylinder large, the face pressure of the edge face of the inner cylinder by fastening to the attachment member can be made small.

The upset portion can also be formed by machining or other processing, but it is preferred that the upset portion be formed by abuttingly forcing the edge face of the inner cylinder in the axial direction, after vulcanization molding of the rubber-like elastomer between the inner and outer cylinders, because of the fact that the formation of the upset portion by post-processing (subsequent processing to the vulcanization molding) is easier.

That is to say, the invention can further provide such a vibration-isolating bushing that the inner cylinder is made of a metal member and the upset portion is formed by abuttingly forcing the edge face of the inner cylinder in the axial direction, in addition to the construction of claim 1 as set forth in the appended claims.

Further, it is possible to form the upset portion not only at one extremity part of the inner cylinder, but also at both extremity parts thereof That is, the invention can also provide a vibration-isolating bushing, wherein the upset portions are formed at both extremity parts of the inner cylinder.

Referring to the construction of the inner cylinder, it is possible to adopt either an embodiment wherein the bulge portion bulging in the axially square direction in an axially central area of the inner cylinder is molded integrally with the inner cylinder by machining the outer circumferential surface of the inner cylinder or another embodiment wherein the bulge portion is constructed separately from the inner cylinder and both are united together.

Where the inner cylinder and the bulge portion are separately constructed, the bulge portion may be made of either metal or synthetic resin. With a material of synthetic resin, the bulge portion can be rendered lightweight.

Here, the synthetic resin can be exemplified by general-purpose resins including polyolefine such as polyethylene, polypropylene, etc., polyvinyl chloride, polyvinylidene chloride, acrylonitrile-styrene resin (AS resin), ABS or other acrylic series resins; thermoplastic resins called engineering plastics such as polyamide, polycarbonate, polyester such as polyethylene terephthalate (PET), polybutylene terephthalate (PBT), etc., polyacetal, modified polyphenylene ether, etc.; resins called super engineering plastics including polyphenylene sulfide, polyether ether ketone (PEEK), polyarylate, polysulfone, polyether sulfone, polyketone sulfide, polyetherimide, polytetrafluoroethylene, aromatic polyester, polyamino-bismaleimide, triazine resin, etc.

Among those, polyamide such as nylon 6, nylon 66, etc., polyethylene terephthalate, polybutylene terephthalate, polyphenylene sulfide, etc. are particularly preferred. These resins may be fixed to the outer circumferential face of the inner cylinder by injection molding or the like.

Stated another way, this invention can provide such a vibration-isolating bushing that the bulge portion is made of a synthetic resin and fixed to the outer circumferential face of the inner cylinder and the synthetic resin is selected from polyethylene terephthalate, polybutylene terephthalate, polyphenylene sulfide or polyamide, as well.

According to another aspect of the invention, a method of manufacturing the vibration-isolating bushing as constructed above is provided, which is characterized in that first, an outer cylinder is disposed outwardly of and in a spaced relationship to an inner cylinder, which has a bulge portion, at its axially central part, bulging in an axially square direction, a rubber-like elastomer is interposed between the inner cylinder and the outer cylinder and subjected to vulcanization molding and subsequently to the molding, the one edge of the inner cylinder is forced abuttingly in the axial direction on a contact-pressing jig thereby forming the upset portion at one extremity side wherein the one extremity part of the inner cylinder has a larger wall-thickness than other part than the extremity part.

Further where both extremity parts of the inner cylinder are each provided with an upset portion, this invention can also provide a method of manufacturing the vibration-isolating bushing, which comprises, after forming the one upset portion at the one extremity part, abuttingly forcing the other edge of the inner cylinder in the axial direction on the contact-pressing jig thereby forming an upset portion at the other extremity part as well, wherein the other extremity part of the inner cylinder has a larger wall-thickness than other part than the one extremity part and the other extremity part.

In accordance with the aforementioned constitution, if the edge face of the inner cylinder is formed by abuttment forcing in the axial direction after vulcanization molding of the rubber-like elastomer between the inner and outer cylinders as described above, it is possible to form the upset portion easily by post processing subsequent to the vulcanization molding of the rubber-like elastomer. Moreover when the vibration-isolating bushing is removed from a shaping mold, the mold releasing work is facilitated because of the absence of the upset portion.

The invention will be hereinafter described in more detail with reference to the accompanying drawings, in which:
Fig. 1 is a perspective view of a vibration-isolating bushing pertaining to one embodiment of this invention;
Fig. 2 is a sectional view taken along II-II line of Fig. 1;
Fig. 3 is a sectional view of an inner cylinder in Fig. 1 taken along the axial direction thereof;
Fig. 4 is likewise a sectional view of the vibration-isolating bushing before upsetting of the inner cylinder of Fig. 1 taken along the axial direction thereof;
Fig. 5 is a sectional view of the vibration-isolating bushing of Fig. 1 showing a way in which the outside edge of the inner cylinder is upset;
Fig. 6 is a sectional view of a vibration-isolating bushing pertaining to another embodiment of this invention, whose inner cylinder is bulged in an axially central area thereof taken along the axial direction; and Fig. 7 is a sectional view of a conventional vibration-isolating bushing taken along the axial direction thereof

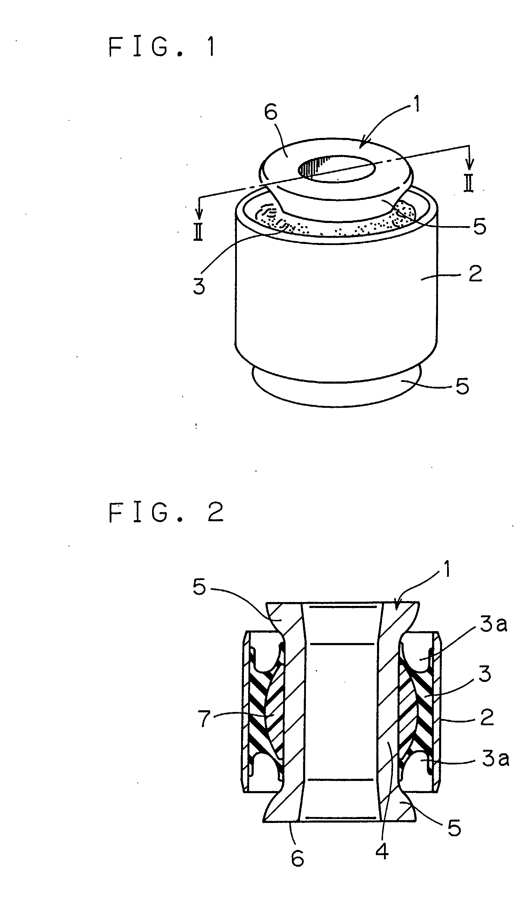

The vibration-isolating bushing shown in Figs. 1 and 2 is made up of an inner cylinder 1 of metal, an outer cylinder 2 disposed outwardly of the inner cylinder 1 in the axially square direction thereto so as to be spaced apart, and a rubber-like elastomer 3 in a ring-form interposed between the inner cylinder 1 and the outer cylinder 2, the inner cylinder 1 and the outer cylinder 2 being connected in a vibration-isolating manner by being fitted respectively to separate members.

The inner cylinder 1 is, for example, made of a steel and is comprised of a covered part 4 extending in an axially central part of the inner cylinder and adapted to be covered with the rubber-like elastomer 3, and upset portions 5 having a wall thickness larger than the covered part 4, formed at axially both sides of the covered part 4 so that the covered part 4 and the upset portions 5 join with each other to assume a drum form. The inner cylinder is adapted so that while in the condition that the edge faces 6 of the upset portions 5 are pinched by means of an attachment member such as a bracket or only one edge face 6 of the one upset portion 5 is abutted on the attachment member, a shaft member such as a bolt is inserted into a central through-hole of the inner cylinder 1, followed by fastening and fixing to the attachment member.

The covered part 4 is kept constant at its inside and outside diameters in the axial direction, namely is formed axially of one cross-section. The upset portion 5 has an inside diameter substantially the same as that of the covered part 4 and an outside diameter larger than that of the covered part 4 so that a contact area at its edge face 6 with an attachment member may be larger. The upset portion 5 is formed, as will be described below, by abuttingly forcing the edge face of the inner cylinder having one cross-section in the axial direction.

In the inner cylinder 1, a bulge portion 7 of a synthetic resin is further secured fixedly on a circumferential face of the covered part 4 so as to bulge in a generally spherical form in the normal direction to the axial direction. The bulge portion 7 can be molded of one selected from a variety of synthetic resins, but particularly preferably, is molded of polyamide such as nylon 6 or nylon 66, polyethylene terephthalate, polybutylene terephthalate, or polyphenylene sulfide.

The outer cylinder 2 is a drum-form one made of, for example, a steel and is adapted to be press fitted in an opening of the attachment member to be fixed. The inside and outside diameters of the outer cylinder 2 are larger than the outside diameter of a central part of the bulge portion 7 and are kept practically constant in the axial direction whereas the axial length of the outer cylinder is set slightly larger than that of the covered part 4 of the inner cylinder 1 and shorter than the axial length of the inner cylinder to the extent that the rubber-like elastomer 3 may be housed inside.

The rubber-like elastomer 3 is interposed between the inner cylinder 1 and the outer cylinder 2 so as to cover the outer circumferential face of the bulge portion 7 by vulcanization molding. The thickness of the rubber-like elastomer is set to be thin near the axially central part and thick near axially both extremities owing to the thickness of the bulge portion 7 existing outside the inner cylinder 1.

The rubber-like elastomer 3 is, on the one hand, set to have a large spring constant in the axially normal direction by making its axially central part thin and, on the other hand, set to have a small spring constant in the pry direction by making its both axial extremities thick. Alternatively in order to set the spring constants in three directions, i.e., the axial direction, axially normal direction, and pry direction at respective predetermined values, for example, it is possible to adopt an embodiment as shown in Fig. 2, wherein the rubber-like elastomer 3 is formed with a recess portion 3a circumferentially joining to the axial extremity faces thereof

Now the method of manufacturing this vibration-isolating bushing will be described. First, a drum-like cylinder made of steel having an inside and an outside diameter axially constant, namely having a same sectional form is chosen as the inner cylinder 1, as shown in Fig. 2. This inner cylinder 1 longer in length than the final product length is prepared, taking the formation of upset portions 5 at both ends by subsequent processing into account. Onto the outer circumferential face of the axially central part of the inner cylinder, for example, a synthetic resin heated and melted is injected, thereby being swelled as the bulge portion 7 in a generally hemispherical form and secured rigidly to the inner cylinder 1.

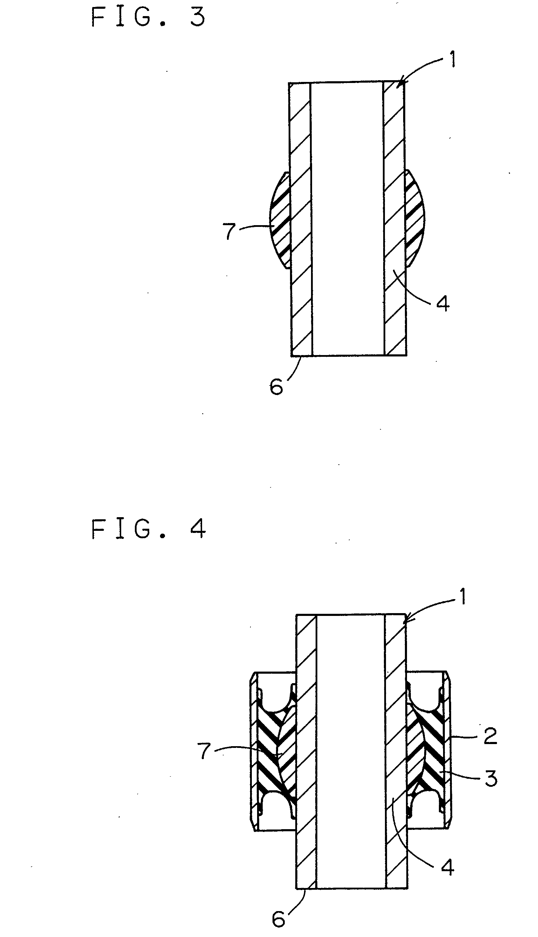

Next, the outer cylinder 2 is arranged outwardly of the inner cylinder 1 so as to be spaced apart therefrom, and the rubber-like elastomer 3 is interposed between the inner and outer cylinders 1,2 in a manner to cover the bulge portion 7, as shown in Fig. 4, followed by vulcanization molding, whereby the inner and outer cylinders 1,2 are united together with the rubber-like elastomer 3.

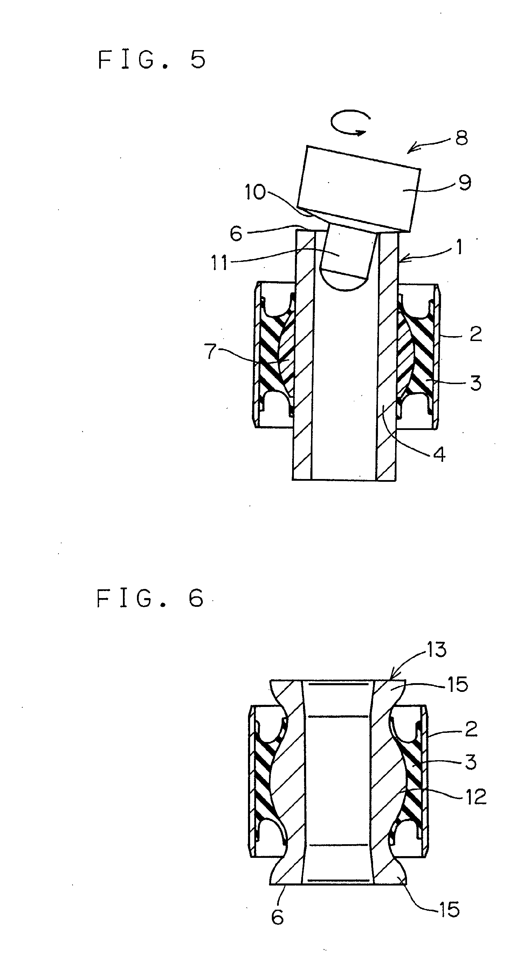

Then the resulting molded product is removed from the vulcanization-molding mold. Thereafter as shown in Fig. 5, a contact-pressing jig 8 is rotated while forcing it in the axial direction abuttingly on the one extremity side (the upper extremity part in the figure) of the inner cylinder 1. By doing so, the one extremity side of the inner cylinder 1 undergoes a plastic deformation accompanied by an axial shrinkage and as a result, the upset portion 5 of a conical cylindrical form is formed, wherein a wall-thickness at the extremity part of the inner cylinder is larger than that of the covered part 4.

Here, the contact-pressing jig 8 is, as shown in Fig. 5, made of a steel having a higher strength than the inner cylinder 1, and comprises a jig main body 9 circular in cross-section, a contact-pressing face 10 formed at an end of the main body 9 and assuming a part of a conical face, and a projecting portion 11 circular in cross-section formed at a center of the contact-pressing face 10.

When the projecting portion 11 of the contact-pressing jig 8 is inserted into a central hole of the inner cylinder 1 from the one end side in a manner to adjust or accommodate the conical pressing face 10 to the one edge face 6 of the inner cylinder 1, and the contact-pressing jig 8 is gyrated about the top point of the projecting portion 11, the inner cylinder 1 is thrusted in the axial direction to cause a plastic deformation while the entire edge face 6 thereof is contact-pressed, as a result of which the outside diameter is enlarged. As for the inside diameter at the one extremity part, it is never reduced since the projecting portion 11 of the jig presses outwardly but only the outside diameter is enlarged.

After the upset portion5 at the one extremity part of the inner cylinder 1 is formed, the inner cylinder 1 is inverted to form another upset portion 5 at the other extremity part thereof in a similar procedure to that of the one extremity part, and ultimately there is completed a vibration-isolating bushing provided with the upset portions 5 at both extremities.

According to the manufacturing method of the vibration-isolating bushing thus described, the upset portions 5 are formed at both extremities of the inner cylinder 1 after vulcanization molding of the rubber-like elastomer 3 and hence, the mold releasing work after the vulcanization molding can be readily done.

This invention should be appreciated not to be limited to the aforementioned embodiments, but any suitable modifications or variations may be made appropriately without departing from the scope and spirit of the invention. For example, instead of forming the bulge portion on the outer circumferential face of the inner cylinder, as shown in Fig. 6, it is also possible to form the inner cylinder 13 integrally with the bulge portion 12 at an outer circumferential side of the inner cylinder 13, both being made of one material. Also in this case, the upset portions 15 of the inner cylinder 13 are preferably formed after vulcanization molding of the rubber-like elastomer.

As will be apparent from the description made above, in accordance with this invention, the inner cylinder is formed with an upset portion having a larger wall-thickness at its extremity and hence, downsizing and weight reduction can be attained without the necessity of enlarging the outside diameter of the entirety of the inner cylinder. Beside, the area of the edge face of the inner cylinder is enlarged and consequently, the face pressure of the edge face due to fastening to an attachment member can be reduced.

The invention has a further advantage in that the upset portion above can be readily formed, when subjected to, after vulcanization molding of the rubber-like elastomer, post-processing by contact-pressing the edge face of the inner cylinder in the axial direction, and the mold releasing upon molding can be easily conducted.

## Claims

1. A vibration-isolating bushing comprising an inner cylinder (1; 13) having, in the vicinity of an axially central part thereof a bulge portion (7; 12) swelling in an axially square direction; an outer cylinder (2) disposed outwardly of and in a spaced relationship to the inner cylinder; and a rubber-like elastomer (3) interposed between the inner cylinder (1; 13) and the outer cylinder (2),
which is **characterized in that** the inner cylinder (1) has an upset portion (5; 15) formed at its extremity part, the upset portion having a larger wall-thickness than other part than the extremity part.

2. The vibration-isolating bushing as set forth in claim 1, wherein the inner cylinder (1; 13) is made of metal and the upset portion (5; 15) is formed by contact-pressing an edge face (6) of the inner cylinder in the axial direction.

3. The vibration-isolating bushing as set forth in claim 1 or 2, wherein the inner cylinder (1; 13) has the upset portions (5; 15) formed at both extremity parts thereof.

4. The vibration-isolating bushing as set forth in claim 1, 2, or 3, wherein the bulge portion (7) is made of a synthetic resin and fixed to an outer peripheral face of the inner cylinder.

5. The vibration-isolating bushing as set forth in claim 4, wherein the synthetic resin is one selected from polyethylene terephthalate, polybutylene terephthalate, polyphenylenesulfide, and polyamide.

6. A method of manufacturing a vibration-isolating bushing which comprises disposing an outer cylinder (2) outside an inner cylinder (1; 13) having in the vicinity of an axially central part thereof a bulge portion (7; 12) that swells in an axially square direction so as to be spaced apart from the inner cylinder; interposing a rubber-like elastomer (3) between the inner cylinder (1) and the outer cylinder (2) to conduct vulcanization molding; and subsequently to the vulcanization molding, abuttingly forcing an axially one edge face (6) of the inner cylinder in the axial direction on a contact-pressing jig (8) thereby forming an upset portion (5; 15) at an extremity part of the inner cylinder that has a larger wall thickness than other part.

7. The method of manufacturing a vibration-isolating bushing as set forth in claim 6, which further comprises, after forming the upset portion (5; 15) at one extremity part of the inner cylinder, abuttingly forcing the other edge face (6) of the inner cylinder in the axial direction on the contact-pressing jig (8) thereby forming the other upset portion (5; 15) at the other extremity part that has a larger wall thickness than other part than the one extremity part and the other extremity part.
